# EUROPÄISCHE PATENTSCHRIFT

(11) **EP 0 979 191 B1**
(45) Veröffentlichungstag und Bekanntmachung des Hinweises auf die Patenterteilung: **06.08.2003**
(21) Anmeldenummer: 99904786.3
(22) Anmeldetag: 16.01.1999
(51) Int. Cl.: B61D 17/04

(54) **VERBUNDTEIL UND VERFAHREN ZU DESSEN HERSTELLUNG**
COMPOSITE PART AND METHOD FOR PRODUCING THE SAME
ELEMENT COMPOSITE ET SON PROCEDE DE FABRICATION

(30) Priorität: 17.02.1998 DE 19806484
(43) Veröffentlichungstag der Anmeldung: 16.02.2000
(73) Patentinhaber: Bombardier Transportation GmbH, 13627 Berlin (DE)
(72) Erfinder: RISTOW, Lutz, D-80637 München (DE); HOLZAPFEL, Wolfgang, D-90552 Röthenbach (DE); STEGSCHUSTER, Reinhold, D-85399 Hallbergmoos (DE)
(74) Vertreter: Cohausz & Florack
(86) Internationale Anmeldenummer: EP9900231
(87) Internationale Veröffentlichungsnummer: WO99042350

(56) Entgegenhaltungen:
- EP-A- 0 582 544
- US-A- 5 685 229

## Beschreibung

Die vorliegende Erfindung betrifft ein Verbundteil aus einem eine obere und untere metallische Deckschicht und einen metallischen, in Wabenstruktur aufgebauten Kern umfassenden Sandwichbauteil und mindestens einem mit einer Verbindungsfläche ausgestatteten metallischen Profil zur Krafteinleitung in das Sandwichbauteil und ein Verfahren zur Herstellung eines solchen.

Konstruktionen in Sandwichbauweise zeichnen sich durch hohe Biegesteifigkeit bei gleichzeitig geringem Gewicht aus. Aus diesem Grund wird der Einsatz dieser Bauweise im Transportbereich - besonders in der Bahntechnologie - immer häufiger erwogen. Für hochbeanspruchte Konstruktionen ist es sinnvoll, diese Sandwichverbünde aus metallischen Werkstoffen herzustellen.

Um weitere Komponenten an den Sandwichbauteilen anzulenken oder verschiedene Sandwichbauteile in beliebigen Winkeln zueinander zu verbinden, werden zur Krafteinleitung und zum Anbringen von Anbindepunkten Profile integriert. Der Aufbau größerer Sandwichbauteile wird bewerkstelligt, indem mehrere kleinere Sandwichbauteile, im folgenden Grundbauteile genannt, je nach Anforderung zu einem großen Sandwichbauteil zusammengefügt werden.

Aus EP 0 544 498 sind Verbundteile aus Sandwichbauteilen und Profilen zur Krafteinleitung bekannt, bei denen die Profile mit einem zur Deckschicht des Sandwichbauteils senkrecht stehenden Steg zwischen zwei an ihren Enden stumpf aneinandergestoßenen Grundbauteilen geschweißt sind. Dabei wird eine Verstärkung zum Anbringen der Profile benutzt, die dadurch entsteht, daß sowohl Sandwichbauteile als auch Grundbauteile in ihrem Endbereich normalerweise durch U-förmige, mit dem offenen Bereich nach außen zeigende und an Stelle des Kerns eingefügte Verstärkungsprofile abgeschlossen und verstärkt sind. Geschweißt wird bei dieser Art der Anbringung entlang der Kontaktstellen von Deckfläche und Profil.

Bei einem Verbundteil gemäß EP 0 644 096 sind die Profile mit einer Verbindungsfläche entweder auf dem mit U-förmigen Verstärkungsprofilen verstärkten Verbindungsbereich zweier Grundbauteile am Rand festgeschweißt oder auf die mit hohlen Verstärkungsprofilen unterlegte Deckschicht genietet.

Bei allen bekannten Verbundteilen wird das Profil an das Sandwichbauteil geschweißt oder genietet, wodurch ein punktueller oder linienförmiger Kraftübertrag vom Profil auf das Sandwichbauteil stattfindet. Dies setzt aber voraus, daß das Sandwichbauteil im Schweißbereich verstärkt wird. Die Verstärkung wird durch extra eingebrachte hohle Verstärkungsprofile an Stelle des metallischen Kerns oder durch U-förmige Verstärkungsprofile im Stoßbereich zweier Grundbauteile bewerkstelligt.

Nachteilig wirkt sich bei derartigen Verbundteilen der Aufbau von großen Bauteilen mit mehreren Profilen zur Krafteinleitung aus. Entweder müssen große Bauteile, wie z. B. Seitenwände eines Waggons, aus vielen kleinen Verbundteilen aufgebaut werden, um die Profile zur Krafteinleitung an Stoßstellen plazieren zu können oder die Sandwichbauteile müssen im voraus an den entsprechenden Stellen mit hohlen Verstärkungsprofilen an Stelle des Kerns versehen werden. In allen Fällen ist ein nachträgliches Anbringen von Profilen zur Krafteinleitung nicht mehr möglich, wenn dort kein Verstärkungsprofil eingearbeitet ist. Außerdem ist der Aufbau von größeren Bauteilen aus vielen kleinen Verbundteilen kosten- und zeitintensiv. Des weiteren entstehen an den Schweißnähten oder Nietverbindungen Spaltkorrosions- bzw. Kontaktkorrosionsprobleme, welche die Lebensdauer der Bauteile erheblich beeinflussen.

Die Aufgabe der vorliegenden Erfindung ist es, ein Verbundteil aus einem Sandwichbauteil und einem/mehreren Profil(en) zur Krafteinleitung anzugeben, mit dem es möglich ist, größere Bauteile, bei denen mehrere Krafteinleitungspunkte benötigt werden, aus wenigen großen Verbundteilen zusammen zu bauen. Auch soll es bei den Verbundteilen nachträglich möglich sein, Profile an beliebigen Stellen anzubringen, ohne daß der Kraftübertrag beeinflusst wird.

Zur Lösung der Aufgabe ist ein Verbundteil der eingangs beschriebenen Art erfindungsgemäß dadurch gekennzeichnet, daß das/die Profil(e) flächig auf das Sandwichbauteil gefügt ist/sind.

Durch das erfindungsgemäße Verbundteil können größere, mit mehreren Profilen zur Krafteinlenkung versehene Bauteile leicht hergestellt werden, indem das Verbundteil in seinen Ausmaßen samt Profilen an das zu formende Bauteil optimal angepaßt wird, ohne an den Krafteinleitungsstellen das Sandwichbauteil unterbrechen und neu ansetzen zu müssen, was den Aufbauprozeß der Bauteile wesentlich vereinfacht und zu Kostenersparnis führt. Die Profile zur Krafteinleitung werden an das Sandwichbauteil gefügt, nachdem das Sandwichbauteil in seinen Ausmaßen optimal an das zu formende Bauteil angepaßt wurde. Da die Fügungsstellen der Profile zur Krafteinleitung unabhängig sind von Stoßstellen bzw. Verstärkungsstellen der Sandwichbauteile, können weitere Profile auch zu einem späteren Zeitpunkt beliebig an das schon bestehende Verbundteil gefügt werden, was die Variabilität der Verbundteile erhöht. Des weiteren wird die Qualität der Verbindung von Profil und Sandwichbauteil durch das flächige Fügen der Profile verbessert, wodurch der Aufbau der Verbundteile stabilisiert wird. So wird zur Erhöhung der Lebensdauer die Spaltkorrosion bzw. Kontaktkorrosion an den Fügestellen verhindert.

Zum flächigen Fügen der Profile an die Sandwichbauteile weisen diese mindestens eine an die Deckschicht anschließende Verbindungsfläche auf. Die Gesamtgeometrie der verwendeten Profile wird dem jeweiligen Verwendungszweck angepaßt. Je nachdem, ob weitere Teile angeschweißt, angeschraubt oder angenietet werden, weisen die Profile weitere Flächen bzw. T-Elemente oder geschlitzte Hohlkörper zum Einbringen eines Schrauben- oder Nietkopfes auf. Diese Formgebung wird vorteilhaft dadurch erzielt, daß Strangpreßprofile als Krafteinleitungselemente verwendet werden.

Das gegenüber dem Schweißen der Profile an den verstärkten Sandwichbauteilen Vorteile aufweisende flächige Fügen kann nun dadurch durchgeführt werden, daß das Profil auf das Sandwichbauteil geklebt wird, doch bevorzugt ist das metallische Profil auf die metallische Deckschicht gelötet. Hierdurch wird besonders bei starken Vibrationen eine erhöhte Haftung erzielt.

Der folgende Teil der Beschreibung bezieht sich auf ein Verfahren zur Herstellung des erfindungsgemäßen Verbundteils.

Bei einem Verfahren gemäß EP 0 405 889 werden die Verbundteile hergestellt, indem die Sandwichbauteile mit Verstärkungen an den für die Profile vorgesehenen Positionen oder durch Aneinanderstoßen von im Randbereich verstärkten Grundbauteilen in einem ersten Arbeitsschritt gefertigt werden und die Profile in einem zweiten Arbeitsschritt mit mindestens einer Naht an die verstärkten Bereiche geschweißt werden.

Der erste Arbeitsschritt beinhaltet neben der reinen Herstellung der Sandwichbauteile weitere Arbeitsabläufe, da die Verstärkungen an den für die Profile vorgesehenen Positionen eingebracht werden müssen, was die Einbringung des metallischen Kerns unterbricht und die Herstellung derart verstärkter Sandwichbauteile sehr aufwendig macht. Außerdem lassen sich die Verstärkungsprofile nicht in jedem beliebigen Winkel zur Wabenstruktur des Kerns einbringen, was eine Limitierung der Anwendungsmöglichkeiten darstellt. Auch die Herstellung der Sandwichbauteile aus aneinandergestoßenen Grundbauteilen erhöht den Arbeitsaufwand im ersten Arbeitsschritt. Werden mehrere Schweißnähte angebracht, um das Profil am verstärkten Sandwichbauteil zu befestigen, erhöht sich außerdem die Zahl der Arbeitsabläufe im zweiten Arbeitsschritt entsprechend.

Die Aufgabe der vorliegenden Erfindung soll weiterhin sein ein Verfahren zur Herstellung eines erfindungsgemäßen Verbundteils aus Sandwichbauteil und Profil zur Krafteinleitung zu schaffen, bei dem die Anzahl der Arbeitsschritte und die darin enthaltenen Arbeitsabläufe minimiert sind.

Die Lösung der Aufgabe wird erfindungsgemäß dadurch erzielt, daß das/die Profil(e) während des Herstellprozesses des Sandwichbauteils auf das Sandwichteil gefügt wird/werden.

Vorteilig wirkt sich bei diesem erfindungsgemäßen Verfahren aus, daß durch die gleichzeitige Herstellung von Sandwichbauteilen und Fügen der Profile der gesamte zweite Arbeitsschritt eingespart wird. Da die Profile auch in Bereichen ohne Verstärkungsprofile und ohne Beachtung einer bestimmten Richtung zur Wabenstruktur des Kerns gefügt werden können, ist es mit dem erfindungsgemäßen Verfahren auch möglich, Verbundteile mit beliebig orientierten Profilen zu fertigen.

Während der Herstellung des Sandwichbauteils werden die Parameter dieses Prozesses für das Fügen des Profils an das Sandwichbauteil ausgenutzt. Da es sich bei den Deckschichten und dem wabenförmigen Kem um metallische Komponenten handelt, ist es vorteilhaft, die Deckschichten durch Löten mit dem Kern zu verbinden. Besonders vorteilhaft ist es, wenn zum Löten der Deckschichten auf dem Kern lotplatierte Deckschichten verwendet werden. Kontaktiert die lotplatierte Seite den metallischen Kern, so läuft der Lötvorgang ab, wenn die Komponenten unter Luftausschluß, insbesondere Vakuum, auf eine über dem Schmelzpunkt des Lots liegende Temperatur erhitzt werden. Das Lot wird verflüssigt und sammelt sich an den Kontaktstellen der Deckschicht mit den Stegen der wabenförmigen Struktur des Kerns, so daß beim Abkühlen ein gelötetes Sandwichbauteil gebildet wird.

Die Parameter des Herstellprozesses des Sandwichbauteils - wie die auftretende Temperatur - können genutzt werden, um das Profil gleichzeitig auf das Sandwichbauteil zu fügen. Dazu wird auch das Profil bevorzugt auf das Sandwichbauteil gelötet. Vorteilhaft werden bei dem erfindungsgemäßen Verfahren Deckschichten verwendet, die auf der dem Profil zugewandten Seite lotplatiert sind, so daß durch die Temperatur beim Herstellprozeß das Lot auf dieser Seite der Deckschicht ebenfalls verflüssigt wird und sich unter Luftausschluß an der Kontaktstelle von Profil und Deckschicht sammelt. Hierdurch wird beim Abkühlen des Verbundteils das Profil flächig auf das Sandwichbauteil gefügt.

Die Erfindung wird im folgenden an Hand eines in einer Zeichnung dargestellten Ausführungsbeispiels näher beschrieben, aus dem sich weitere Einzelheiten, Merkmale und Vorzüge ergeben.

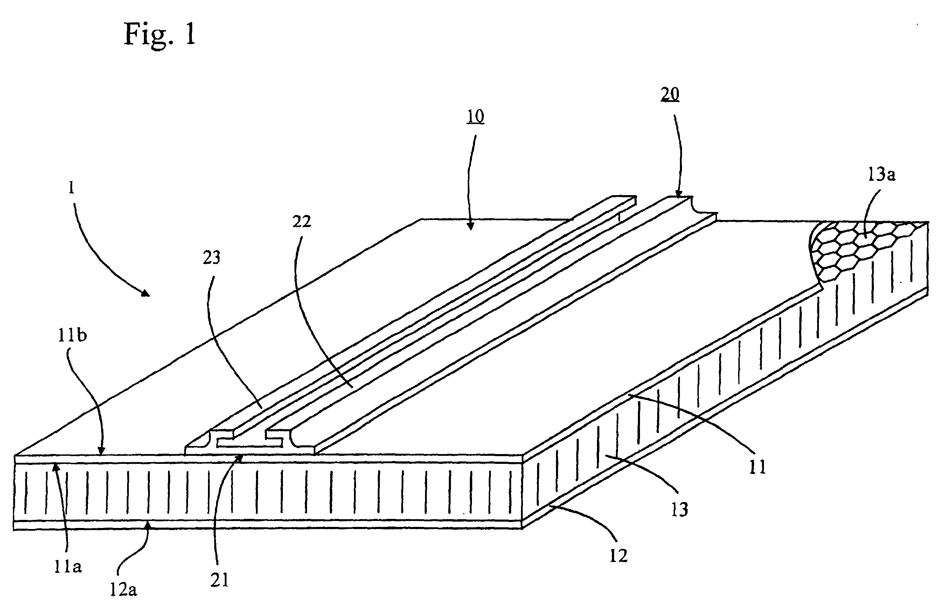

Die Figur zeigt ein Verbundteil aus einem Sandwichbauteil und einem flächig gefiigten Profil zur Krafteinleitung.

Bei dem gezeigten Ausführungsbeispiel handelt es sich um ein Verbundteil 1, das ein Sandwichbauteil 10 und ein angefügtes Profil zur Krafteinleitung 20 umfaßt. Das Sandwichbauteil ist aus einer oberen Deckschicht 11, einer unteren Deckschicht 12 und einem metallischen Kern 13 aufgebaut. Letzerer ist zwischen den Deckschichten 11, 12 angebracht und wird durch eine Vielzahl von aneinandergefügten Waben 13a gebildet. Durch diesen Aufbau weist das Sandwichbauteil eine hohe Biegesteifigkeit bei gleichzeitig geringem Gewicht aus.

Durch Verwendung von oberen und unteren Deckschichten 11, 12, die lotplatierte Seiten 11a, 12a zum metallischen Kern 13 hin aufweisen, vereinfacht sich die Herstellung der Sandwichbauteile bzw. der Verbundbauteile, indem der so gepackte Stapel unter Vakuum über die Schmelztemperatur des Lots erhitzt wird, wodurch sich das Lot an den Kontaktstellen der Waben 13a mit der oberen Deckschicht 11 bzw. unteren Deckschicht 12 sammelt und beim Abkühlen der Lötvorgang abgeschlossen wird.

Über diesen Vorgang wird auch das Profil 20 mit der Verbindungsfläche 21 zeitgleich zum Herstellprozeß des Sandwichbauteils auf die äußere Seite 11b der oberen Deckschicht 11 gelötet. Dabei ist auch die äußere Seite 11b der oberen Deckschicht 11 lotplatiert und das Profil 20 an der entsprechenden Position plaziert. Der Vorgang zum Fügen des Profils 20 mit der Verbindungsfläche 21 auf der oberen Deckschicht 11 läuft gleichzeitig zum Herstellungsprozeß des Sandwichbauteils 10 ab. Beim Hochheizen über die Schmelztemperatur des Lots sammelt sich das Lot der lotplatierten äußeren Seite 11b an der Verbindungsfläche 21 und fügt beim Abkühlen das Profil 20 an das Sandwichbauteil 10. Es ist aber auch möglich, nur die Bereiche der äußeren Seite 11b der oberen Deckschicht 11 zu platieren, die später mit einem Profil in Berührung kommen.

Das Profil 20 besitzt in dem gewählten Ausführungsbeispiel neben der Verbindungsfläche 21 noch zwei Backen 22, 23, die einen T-förmigen Bereich eingrenzen, der entweder ein flächiges Bauteil senkrecht zum Sandwichbauteil hält oder in dem sich mehrere mit den Köpfen im T-förmigen Bereich befindliche Schrauben zum Anbringen von Trägern oder ähnlichem befinden können. Natürlich können zum Zwecke unterschiedlichster Art der Krafteinleitung in das erfindungsgemäße Verbundteil auch Profile gefügt sein, die neben der Verbindungsfläche 21 andere Geometrien aufweisen.

## Patentansprüche

1. Verbundteil (1) aus einem eine obere (11) und untere (12) metallische Deckschicht und einen metallischen, in Wabenstruktur aufgebauten Kern (13) umfassenden Sandwichbauteil (10) und mindestens einem mit einer Verbindungsfläche (21) ausgestatteten metallischen Profil (20) zur Krafteinleitung in das Sandwichbauteil (10), **dadurch gekennzeichnet, daß** das/die Profil(e) flächig auf das Sandwichbauteil gefügt ist/sind.

2. Verbundteil nach Anspruch 1, **dadurch gekennzeichnet, daß** das Profil (20) als Strangpreßprofil ausgebildet ist.

3. Verbundteil nach einem oder mehreren der vorausgehenden Ansprüche, **dadurch gekennzeichnet, daß** das Profil (20) auf das Sandwichbauteil (10) geklebt ist.

4. Verbundteil nach einem oder mehreren der vorausgehenden Ansprüche, **dadurch gekennzeichnet, daß** das Profil (20) auf das Sandwichbauteil (10) gelötet ist.

5. Verfahren zur Herstellung eines Verbundteiles (1) nach einem oder mehreren der vorausgehenden Ansprüche, **dadurch gekennzeichnet, daß** das/die Profil(e) (20) während des Herstellprozesses des Sandwichbauteils auf das Sandwichbauteil (10) gefügt wird/werden.

6. Verfahren nach einem oder mehreren der vorausgehenden Ansprüche, **dadurch gekennzeichnet, daß** das Sandwichbauteil (10) durch Löten der metallischen Deckschichten (11,12) mit dem metallischen Kern (13) hergestellt wird.

7. Verfahren nach einem oder mehreren der vorausgehenden Ansprüche, **dadurch gekennzeichnet, daß** Deckschichten (11,12) mit einer lotplatierten Seite (11a,12a) auf dem Kern (13) angebracht werden und der Lötvorgang unter Ausschluß der Luft bei einer Temperatur oberhalb des Schmelzpunktes des Lots durchgeführt wird.

8. Verfahren nach einem oder mehreren der vorausgehenden Ansprüche, **dadurch gekennzeichnet, daß** das Profil (20) auf das Sandwichbauteil (10) gelötet wird.

9. Verfahren nach einem oder mehreren der vorausgehenden Ansprüche, **dadurch gekennzeichnet, daß** Deckschichten (11,12) mit einer dem Profil (20) zugewandten lotplatierten Seite (11b) angebracht werden.

## Claims

1. A composite part (1) comprising an upper metallic cover layer (11) and a lower metallic cover layer (12) and a metallic sandwich component (10) comprising a honeycomb core (13) and at least one metallic profile (20) equipped with a joining surface (21) for introducing forces into the sandwich component (10),
**characterized in that**
the profile(s) is/are joined to the sandwich component in a flat manner.

2. The composite part according to Claim 1, **characterized in that** the profile (20) is designed as an extruded profile.

3. The composite part according to one or more of the preceding claims, **characterized in that** the profile (20) is glued to the sandwich component (10).

4. The composite part according to one or more of the preceding claims, **characterized in that** the profile (20) is soldered to the sandwich component (10).

5. A method of producing a composite part (1) according to one or more of the preceding claims, **characterized in that** the profile(s) (20) is/are joined to the sandwich component (10) during the process of manufacturing the sandwich component.

6. The method according to one or more of the preceding claims, **characterized in that** the sandwich component (10) is manufactured by soldering the metallic cover layers (11, 12) to the metallic core (13).

7. The method according to one or more of the preceding claims, **characterized in that** cover layers (11, 12) are applied to the core (13) with a solder-plated side (11a, 12a), and the soldering process is performed in the absence of air at a temperature above the melting point of the solder.

8. The method according to one or more of the preceding claims, **characterized in that** the profile (20) is soldered to the sandwich component (10).

9. The method according to one or more of the preceding claims, **characterized in that** the cover layers (11, 12) are applied with a solder-plated side (11b) facing the profile (20).

## Revendications

1. Elément composite (1) composé d'une couche de couverture métallique supérieure (11) et inférieure (12) et d'une composante en sandwich (10) entourant un noyau métallique (13) structuré en forme de nid d'abeilles, et d'au moins un profil métallique (20) équipé d'une surface de liaison (21) pour l'introduction de force dans la composante en sandwich (10),
**caractérisé en ce que**
le/les profil(s) est/sont joint(s) en surface à la composante en sandwich.

2. Elément composite selon la revendication 1, **caractérisé en ce que** le profil (20) est conformé comme un profil filé.

3. Elément composite selon l'une quelconque ou plusieurs des revendications précédentes, **caractérisé en ce que** le profil (20) est collé sur la composante en sandwich (10).

4. Elément composite selon l'une quelconque ou plusieurs des revendications précédentes, **caractérisé en ce que** le profil (20) est brasé sur la composante en sandwich (10).

5. Procédé de fabrication d'un élément composite (1) selon l'une quelconque ou plusieurs des revendications précédentes, **caractérisé en ce que** le/les profil(s) (20) est/sont joint(s) à la composante en sandwich (10) pendant le processus de fabrication de la composante en sandwich.

6. Procédé selon l'une quelconque ou plusieurs des revendications précédentes, **caractérisé en ce que** la composante en sandwich (10) est fabriquée par brasage des couches de couverture métalliques (11, 12) avec le noyau métallique (13).

7. Procédé selon l'une quelconque ou plusieurs des revendications précédentes, **caractérisé en ce que** des couches de couverture (11, 12) comportant une face plaquée en matériau de brasage (11a, 12a) sont appliquées sur le noyau (13) et que l'opération de brasage est réalisée en éliminant l'air à une température au dessus du point de fusion du placage.

8. Procédé selon l'une quelconque ou plusieurs des revendications précédentes, **caractérisé en ce que** le profil (20) est brasé sur la composante en sandwich (10) .

9. Procédé selon l'une quelconque ou plusieurs des revendications précédentes, **caractérisé en ce que** des couches de couverture (11, 12) sont appliquées par leur face plaquée en matériau de brasage (11b) tournée vers le profil (20).
